# FASCICULE DE BREVET EUROPEEN

(11) **EP 3 469 279 B1**
(45) Date de publication et mention de la délivrance du brevet: **30.12.2020**
(21) Numéro de dépôt: 17740046.2
(22) Date de dépôt: 09.06.2017
(51) Int. Cl.: F26B 3/20, F26B 17/12, F26B 23/00, F26B 3/22

(54) **PROCÉDÉ DE SÉCHAGE**
TROCKNUNGSVERFAHREN
DRYING METHOD

(30) Priorité: 09.06.2016 FR 1655302
(43) Date de publication de la demande: 17.04.2019
(73) Titulaire: Haffner Energy, 51300 Vitry Le Francois (FR)
(72) Inventeur: FERNANDEZ DE GRADO, Alain, 51300 Les Rivières Henruel (FR); HAFFNER, Philippe, 51300 Vitry Le François (FR)
(74) Mandataire: Oudin, Stéphane
(86) Numéro de dépôt international: PCT/FR2017/051465
(87) Numéro de publication internationale: WO 2017/212188

(56) Documents cités:
- EP-A2- 0 927 703
- WO-A1-99/21632
- WO-A2-2008/013974
- DE-A1- 3 151 045
- FR-A1- 2 541 760
- US-A- 3 290 790
- US-A- 3 859 734
- US-A1- 2012 111 715

## Description

### Domaine de l'invention

La présente invention concerne le domaine du séchage de matière humide, solide ou liquide.

### Etat de la technique

Afin de procéder au séchage d'un produit humide, il est fréquent d'utiliser des séchoirs à air chaud non saturé en vapeur d'eau dont le principe d'action repose sur la capacité d'un air chaud et sec à apporter de l'énergie dans une matière humide et à provoquer la vaporisation et l'entraînement d'une partie de l'eau présente dans la matière. L'air devient alors moins chaud et plus humide. Il est généralement évacué en l'état dans l'atmosphère ce qui implique une consommation énergétique élevée, car l'énergie de vaporisation de l'eau est alors perdue, la vapeur d'eau étant dissipée dans l'atmosphère.

Il faut aussi assurer la circulation de cet air de façon homogène à travers la matière humide, ce qui suppose que celle-ci ne forme pas un lit compact, ce qui n'est pas assuré, notamment lorsque la matière à sécher comprend beaucoup d'éléments très fins (typiquement d'une taille inférieure à 10 mm) et forme un matelas sans porosité. Il faut alors généralement procéder à la mise en mouvement de la matière afin de créer des vides ou des espaces poreux, par exemple dans un tambour tournant ou par une circulation d'air de fluidisation, ce qui dégrade le bilan énergétique de l'opération et impose des équipements volumineux.

De plus, l'air chaud n'est pas un fluide caloporteur performant car sa capacité calorifique et sa conductivité thermique sont médiocres, respectivement proche de 0,34 W.h.m⁻³.K⁻¹ et 0,025 W.m⁻¹.K⁻¹. Certains séchoirs mettent alors en œuvre des surfaces solides afin d'apporter tout ou partie de la chaleur par conduction thermique tels des tubes, .. . Ces surfaces sont alimentées par des fluides chauds ou par un dispositif de chauffage électrique ou équivalent. Il est alors difficile de garantir un contact intime entre la matière humide et les surfaces chauffées apporteuses d'énergie de vaporisation. De plus, à proximité des surfaces chauffées, par le fait du séchage, il se forme une couche d'air généralement saturée en eau ou bien une couche de vapeur d'eau saturée, ce qui freine voire empêche la transmission de chaleur et limite la performance du séchage .

Concernant la médiocrité du bilan énergétique causée par un échappement direct de la vapeur extraite vers l'atmosphère, une amélioration connue repose sur l'utilisation d'une pompe à chaleur qui traite la vapeur extraite et permet sa condensation. L'énergie récupérée est alors exploitable sous forme de fluide chaud. La complexité de cette solution et son coût économique ne la rendent pas avantageuse pour la grande majorité des applications.

Une autre amélioration repose sur l'utilisation d'une compression mécanique de vapeur. La vapeur d'eau extraite de la matière, qui a par exemple une pression de 1 bar et une température de 100°C, est comprimée par le biais d'un compresseur de vapeur, par exemple au-delà de 5 bar, ce qui lui permet d'atteindre une température de condensation potentielle de plus de 150°C. La vapeur comprimée réchauffée est alors renvoyée vers l'enceinte plus froide du séchoir, à travers des éléments de chauffage étanches, de façon à transmettre cette énergie à la matière humide et permettre l'évaporation d'eau. Lors de cet échange de chaleur, la vapeur comprimée se refroidit et condense, restituant ainsi l'énergie de vaporisation.

Les défauts de cette solution sont, d'une part, qu'il est nécessaire que la vapeur soit l'élément principal, donc en absence d'air parasite qui ne permettrait pas d'atteindre la température de changement de phase visée pour la pression appliquée, par le fait de l'impact perturbateur de la pression partielle de l'air, mais aussi les risques majeurs de corrosion des équipements de compression mécanique de la vapeur. D'autre part, pour que les éléments de chauffage étanches assurent un échange thermique efficace vers la matière humide, il faut qu'il y ait un contact intime entre la matière et les surfaces chauffées ce qui impose des solutions techniques coûteuses, comme la présence de nombreux plateaux, avec des ailettes, ... ; autant d'éléments mécaniques qui peuvent être une cause d'encrassement ou de blocage de la matière humide à traiter. Enfin, il faut que la puissance de séchage requise puisse reposer sur le seul phénomène de conduction thermique.

On connaît également des dispositifs de séchage mettant en œuvre des particules incombustibles chaudes (e.g. du sable) mélangées à la matière à sécher. Ces particules peuvent être récupérées à l'issu du séchage afin d'être réutilisées. Il est également connu d'utiliser la vapeur émise lors de l'étape de séchage pour préchauffer lesdites particules incombustibles. Toutefois, cette dernière étape provoque un phénomène d'humidification des particules incombustibles (e.g. sous la forme d'une pellicule à leur surface) nuisible à l'efficacité du procédé.

Le document WO 2008/013974 A2 divulgue un procédé selon l'art antérieur.

### Description de l'invention

La présente invention concerne le domaine du séchage de matière humide.

Par exemple, lors de la production d'énergie par combustion de matière organique solide, la présence d'eau libre ou liée dans la matière altère les performances de la combustion, soit par la nécessité d'apporter de l'énergie pour chauffer et vaporiser cette eau non valorisable qui représente alors un coût énergétique, soit par le fait que le taux d'humidité n'est pas nécessairement constant dans la matière amenée dans la chaudière, ce qui perturbe la stabilité de la combustion et la qualité des émissions atmosphériques. De plus, l'énergie perdue dans les fumées, du fait que cette eau est évacuée sous forme de vapeur, cause une perte d'énergie dite chaleur latente.

L'invention concerne aussi le séchage de matière de façon à faciliter sa valorisation ultérieure, son transport ou sa stabilité. C'est par exemple le cas pour de la pâte à papier humide qu'il s'agit de sécher partiellement afin de faciliter son transport ultérieur en minimisant la masse à transporter, les risques de développement bactérien, l'envoi en aval de la filière de composés dissous dans l'eau qui sont une source de DCO (demande chimique d'oxygène), etc.

Elle concerne aussi le séchage de matière organique avant stockage, afin de faciliter son stockage sans dégradation bactérienne ultérieure, comme par exemple pour de la déshydratation de plantes fourragères destinées à l'élevage telles que la luzerne, etc.

Elle concerne aussi le séchage de boues de papeterie, de station d'épuration d'eaux usées, de rejets de pulpeurs de recyclage de vieux papiers.

Elle concerne aussi la préparation de biomasse solide humide ou de déchets humides afin d'homogénéiser leur taux d'humidité, en vue de leur transformation sous forme de pellets ou leur torréfaction, leur pyrolyse, leur thermolyse,

L'invention est définie par un procédé selon la revendication 1 et un procédé selon la revendication 2. Ainsi, la présente invention concerne notamment un procédé de séparation entre de l'eau et un solide, par évaporation partielle ou totale de l'eau, comprenant :
- une étape (i) où de la matière humide est mélangée avec des particules solides indépendantes formant un média de vaporisation, dont la température est supérieure à celle de ladite matière humide,
- une étape (ii) où le mélange produit à l'étape (i) est introduit dans une enceinte de vaporisation dans laquelle la chaleur apportée par le média de vaporisation à la matière humide permet la vaporisation d'une partie de l'eau introduite,
- une étape (iii) où la vapeur produite à l'étape (ii) est captée et comprimée, de sorte à obtenir une vapeur ayant une plus haute pression et donc une plus haute température,
- une étape (iv) où ladite vapeur comprimée est condensée et transmet son enthalpie à un média caloporteur de condensation, solide ou liquide, de sorte que ladite vapeur comprimée se condense sous forme liquide, remarquable en ce que l'enthalpie captée par ledit média caloporteur de condensation est transmise audit média de vaporisation avant son utilisation à l'étape (i) et en ce que le mélange produit à l'étape (i) circule dans l'enceinte, lors de l'étape (ii), depuis un point haut vers un point bas de ladite enceinte, en tout ou partie sous l'effet de son propre poids.

Selon un mode de réalisation alternatif, le procédé selon l'invention comprend les étapes (i) et (ii) précédentes et :
- une étape (iii) où la vapeur produite à l'étape (ii) transmet son enthalpie à un fluide caloporteur auxiliaire qui est ensuite comprimé, de sorte à obtenir un fluide caloporteur auxiliaire ayant une plus haute pression et donc une plus haute température,
- une étape (iv) où ledit fluide caloporteur auxiliaire comprimé est condensé et transmet, directement ou indirectement, son enthalpie à un média caloporteur de condensation, solide ou liquide, de sorte que ledit fluide caloporteur comprimé se condense sous forme liquide, remarquable en ce que l'enthalpie captée par ledit média caloporteur de condensation est transmise audit média de vaporisation avant son utilisation à l'étape (i) et en ce que le mélange produit à l'étape (i) circule dans l'enceinte, lors de l'étape (ii), depuis un point haut vers un point bas de ladite enceinte, en tout ou partie sous l'effet de son propre poids.

Dans le cadre de la présente invention, le terme « directement » entend signifier que le fluide caloporteur auxiliaire comprimé est mis au contact du média caloporteur de condensation.

Dans le cadre de la présente invention, le terme « indirectement » entend signifier que le transfert d'enthalpie, entre le fluide caloporteur auxiliaire comprimée et le média caloporteur de condensation, est réalisé via au moins un échangeur de chaleur. Selon un mode de réalisation préféré de l'invention, le transfert d'enthalpie, entre le fluide caloporteur auxiliaire comprimée et le média caloporteur de condensation, est réalisé via un échangeur de chaleur entre le fluide caloporteur comprimé et un fluide caloporteur secondaire qui échange, directement ou indirectement, son enthalpie avec ledit média caloporteur de condensation. Selon un mode de réalisation encore plus préféré de l'invention, ledit fluide caloporteur secondaire est comprimé, de sorte à obtenir un fluide caloporteur secondaire ayant une plus haute pression et donc une plus haute température, préalablement à l'échange d'enthalpie avec ledit média caloporteur de condensation. Alternativement, ledit fluide caloporteur secondaire peut échanger son enthalpie avec ledit média caloporteur de condensation à la pression atmosphérique.

Selon un mode de réalisation préféré de l'invention ledit fluide caloporteur secondaire est un gaz et encore plus préférentiellement de l'air.

Par le terme « circule dans l'enceinte depuis un point haut vers un point bas » on entend indiquer que le mélange circule dans l'enceinte de haut en bas. De façon préférée, ledit mélange circule selon un axe formant un angle avec la verticale de moins de 45°, encore plus préférentiellement de moins de 20° et tout à fait préférentiellement de moins de 5° .

Par souci de clarté, il est précisé que ledit « média de vaporisation » est formé par les particules solides indépendantes et non pas par le mélange de la matière humide et des particules solides indépendantes.

Par le terme « sous l'effet de son propre poids » on entend indiquer que ledit mélange se déplace en tout ou partie sous l'effet de la gravité et préférentiellement uniquement sous l'effet de la gravité.

Avantageusement, ledit mélange remplit la totalité de la section horizontale de l'enceinte sur tout ou partie de la hauteur de ladite enceinte. Préférentiellement, ledit mélange remplit la totalité de la section horizontale de l'enceinte sur toute la hauteur de ladite enceinte.

Selon l'invention, ledit média caloporteur de condensation comprend des particules solides indépendantes et est un média de condensation, qui est transféré depuis une enceinte de condensation vers l'enceinte de vaporisation, de sorte qu'il devienne un média de vaporisation et que lesdites particules solides indépendantes participent de façon cyclique aux deux phases d'échange d'enthalpie.

Selon l'invention définie par la revendication 1, durant l'étape (iv) ledit média caloporteur de condensation, formé de particules solides indépendantes, est dans ladite enceinte de condensation, à une pression supérieure à la pression atmosphérique.

Selon un mode de réalisation encore plus préféré la pression à l'intérieur de ladite enceinte de condensation est supérieure à 2 bar, encore plus préférentiellement supérieure à 3 bar et tout à fait préférentiellement supérieure à 4 bar.

Selon ce dernier mode de réalisation, ladite enceinte de condensation est une enceinte étanche. Selon l'invention définie par la revendication 1, l'étape (iv) est suivie d'une étape de décompression de l'enceinte de condensation. Cette étape de décompression est précédée d'une étape d'évacuation, de l'enceinte de condensation, de tout ou partie du liquide formé par la condensation de la vapeur comprimée ou du fluide caloporteur comprimé. Cette dernière étape de décompression va notamment permettre l'évaporation du liquide restant dans l'enceinte de condensation et notamment du liquide formant une pellicule à la surface des particules solides indépendantes du média de condensation et permet de sécher ledit média. Le séchage de la pellicule à l'avantage de pouvoir envoyer directement le média de condensation dans l'enceinte de vaporisation sans amener d'humidité supplémentaire.

Selon un mode de réalisation préféré de l'invention, le mélange de média de vaporisation et de matière traitée subit une étape de séparation, de sorte que les particules du média soient recirculées dans le procédé et la matière traitée est sortie du procédé.

Selon un mode de réalisation préféré de l'invention, les particules du média d'évaporation sont incombustibles et le mélange de média d'évaporation et de matière traitée subit une étape de combustion, à l'issue de laquelle les particules du média imbrulées sont séparées des cendres de la combustion et sont recirculées dans le procédé.

Selon un autre mode de réalisation préféré de l'invention, les particules du média évaporateur sont incombustibles et le mélange du média d'évaporation et de matière traitée subit une étape de thermo-gazéification, à l'issue de laquelle les particules du média imbrulées sont séparées des cendres de la thermo-gazéification et sont recirculées dans le procédé.

Selon un mode de réalisation préféré de l'invention, lors de l'étape (i) un fluide d'assistance circule à travers le média, de sorte à améliorer les échanges thermiques par convection.

Selon un mode de réalisation encore plus préféré de l'invention, le fluide d'assistance circule à une vitesse supérieure à 0,1 m/s.

La présente invention concerne également un dispositif de séparation entre de l'eau et un solide, par évaporation partielle ou totale de l'eau, remarquable en ce qu'il permet de mettre en œuvre le procédé selon l'invention.

### Avantages de l'invention

Un des avantages de l'invention est que la très forte inertie thermique du média caloporteur mobile, faisant fonction alternativement de média de vaporisation et de média de condensation, associée à ses conductivité et diffusivité thermique élevées, permettent de maximiser la puissance des échanges thermiques entre la matière humide et le média, de façon à faciliter la vaporisation de l'eau, et le maintien éventuel de la surchauffe de la vapeur.

De plus, le média caloporteur mobile présente une très grande surface développée ce qui permet d'obtenir une grande surface d'échange thermique.

Par ailleurs, le procédé selon l'invention présente préférentiellement une ou plusieurs des caractéristiques suivantes :
- Le média caloporteur contenu dans l'enceinte est mobile et non fixe, à la différence des garnissages fixes qui apportent une grande surface d'échange thermique, mais qui ne peuvent aisément extraits de l'enceinte afin de procéder à leur nettoyage.
- De plus, cette mobilité permet de transporter de l'énergie captée par le média caloporteur mobile depuis une zone de l'enceinte vers une autre zone de l'enceinte, voire vers une autre enceinte.
- Le média caloporteur mobile a pour fonction de capter l'enthalpie disponible dans l'enceinte pour la restituer ensuite. Certaines solutions connues de l'homme de l'art disposent d'un four extérieur (à gaz, électrique, ...) dans lequel le média, par exemple sous forme de boulets, circule, de manière à être chauffé par la combustion ayant lieu dans le four extérieur. Ensuite, le média est introduit dans une enceinte dans laquelle l'enthalpie apportée par le média caloporteur est valorisée. L'enthalpie échangée provient donc d'un carburant et d'un dispositif extérieur, tel qu'une chaudière à gaz. Selon l'invention, la fonction du média caloporteur mobile est de récupérer de l'énergie habituellement perdue par la partie aval du procédé, et non de consommer du carburant pour apporter une énergie extérieure, ce qui ne peut que dégrader le bilan énergétique du procédé, alors que ce carburant pourrait être valorisé à l'extérieur de l'invention.
- La fonction d'échanges thermiques, notamment entre le média caloporteur mobile et un gaz (air, syngaz ou vapeur) est prépondérante.
- Le média caloporteur mobile est déplacé de façon essentiellement verticale ce qui autorise un remplissage maximal et homogène de l'enceinte du réacteur, à la différence des tambours horizontaux tournants ou des systèmes avec vis de transfert horizontale. Cela permet d'éviter les problèmes récurrents de stratification et de mélange peu homogène des matières présentant des différences de densité importantes.

Cela permet aussi de garantir un écoulement des fluides homogène dans le média, car il s'avère que dans un média disposé de façon non essentiellement verticale, les particules de média se décollent de la paroi supérieure de l'enceinte et libèrent ainsi un espace dans lequel un écoulement préférentiel de fluide apparait.
- De plus, cette disposition essentiellement verticale facilite la mise en mouvement des particules par la simple gravité, notamment à des températures élevées qui perturbent l'utilisation de pièces mécaniques comme, par exemple, une vis d'Archimède.
- le média caloporteur mobile comporte des espaces de porosité calibrée, à la différence des sables que l'on trouve, par exemple, dans les systèmes de chaudière ou de gazéification à lit fluidisé qui exigent l'emploi d'un gaz de fluidisation injecté à haute pression, source d'usure précoce et de consommation d'énergie. Le média de caloporteur mobile pèse de tout son poids sur les particules organiques qui y sont mélangées, de sorte qu'un effet de compression, de broyage et d'effritement s'effectue, ainsi qu'un contact mécanique favorisant la rapidité des échanges thermiques.
- Le procédé selon l'invention permet un écoulement contrôlé d'un fluide à travers le média caloporteur mobile, en minimisant le risque d'apparition de circuit préférentiel d'écoulement qui court-circuiterait une partie de l'enceinte et réduirait grandement l'intérêt de l'invention. Ainsi, une enceinte dans laquelle le média caloporteur mobile serait disposé selon une couche verticale prise entre deux tôles de guidage perforées et qui serait traversé de façon globalement horizontale par un gaz circulant depuis une des tôles de guidage vers l'autre, ne permet pas d'appliquer l'invention. Car si le lit de média vertical qui s'écoule entre les deux tôles de guidage n'est pas parfaitement homogène en porosité, un écoulement préférentiel du fluide peut apparaitre dans une partie locale du média et tout le reste du média ne serait alors plus actif pour échanger de l'enthalpie avec le fluide qui circule dans l'enceinte. Dans le procédé selon l'invention, il est avantageux de limiter ce risque en assurant une circulation du fluide caloporteur le long de la dimension la plus longue du média de vaporisation, soit, de façon préférée, de façon verticale dans le cas d'un média placé par entassement dans une enceinte verticale. Cet écoulement vertical est assuré par l'utilisation d'une enceinte à paroi pleine remplie de média caloporteur mobile et disposant d'une entrée et d'une sortie de média caloporteur placées en position respectivement haute et basse, ou inversement, de la zone utile du média.

Un autre avantage est que la capacité thermique du média caloporteur mobile peut être adaptée de manière à ce que le séchage comprenne d'abord une phase de montée en température de la matière humide, suivie d'une phase de vaporisation de l'eau libre, puis d'une phase de vaporisation de l'eau liée jusqu'à atteindre un taux d'humidité ciblé.

Un autre avantage est que la grande inertie thermique du média caloporteur mobile supporte les variations d'humidité de la matière humide et permet d'obtenir une bonne régularité du séchage.

Un autre avantage est que la vitesse de déplacement du média caloporteur mobile peut être ajustée en temps réel en fonction de la puissance d'échange d'enthalpie requise.

Un autre avantage est que l'enthalpie apportée par le média caloporteur mobile à la matière humide afin de procéder à l'évaporation d'eau peut être réciproquement récupérée par l'invention grâce à la condensation de la vapeur sur le média.

Un autre avantage est qu'il est possible de choisir un média caloporteur mobile fait d'un matériau insensible aux attaques chimiques, acides ou à l'oxydation, par exemple des billes en alumine (AL203).

Un autre avantage est que la vapeur chargée de poussières en est en partie débarrassée grâce à leur dépôt à la surface des éléments du média caloporteur mobile, facilitant ainsi les étapes ultérieures de compression de vapeur et de nettoyage séparé du média.

Un autre avantage est que le média caloporteur mobile peut être mis en mouvement lentement, ce qui est moins énergivore qu'un mouvement de fluidisation ou de rotation dans un séchoir à tambour tournant, ou bien que la mise en circulation de quantité très importantes d'air de séchage pour les séchoirs à bande.

Un autre avantage est que le média caloporteur mobile permet de garantir une porosité suffisante, quelle que soit la granulométrie ou la composition de la matière humide à traiter.

L'utilisation d'un ou plusieurs fluides caloporteurs pour transférer l'enthalpie, de la vapeur vers le média de condensation, permet d'éviter l'encrassement du média de condensation par les contaminants contenus dans la vapeur émise lors du séchage.

L'utilisation d'un fluide caloporteur secondaire gazeux évite l'apparition du pelliculage.

L'utilisation d'une enceinte de condensation sous-pression permet d'optimiser le rendement énergétique du dispositif et permet, lors de l'étape de décompression de l'enceinte, de supprimer la pellicule liquide à la surface des particules du média de condensation.

D'autres avantages et caractéristiques de l'invention sont décrits ci-après selon les modes possibles de réalisation de l'invention.

Les descriptions font référence aux figures suivantes en annexe :
- la figure 1 représente schématiquement le dispositif de l'invention selon une version à deux enceintes, une de vaporisation et une de condensation
- la figure 2 représente une variante de l'invention selon une version superposée avec économiseur
- la figure 3 représente un exemple de cycle de transformation de vapeur sur un diagramme Température T - Entropie S
- la figure 4 représente un exemple d'échanges d'enthalpie entre l'eau et le média caloporteur sur un diagramme Enthalpie H - Température T.

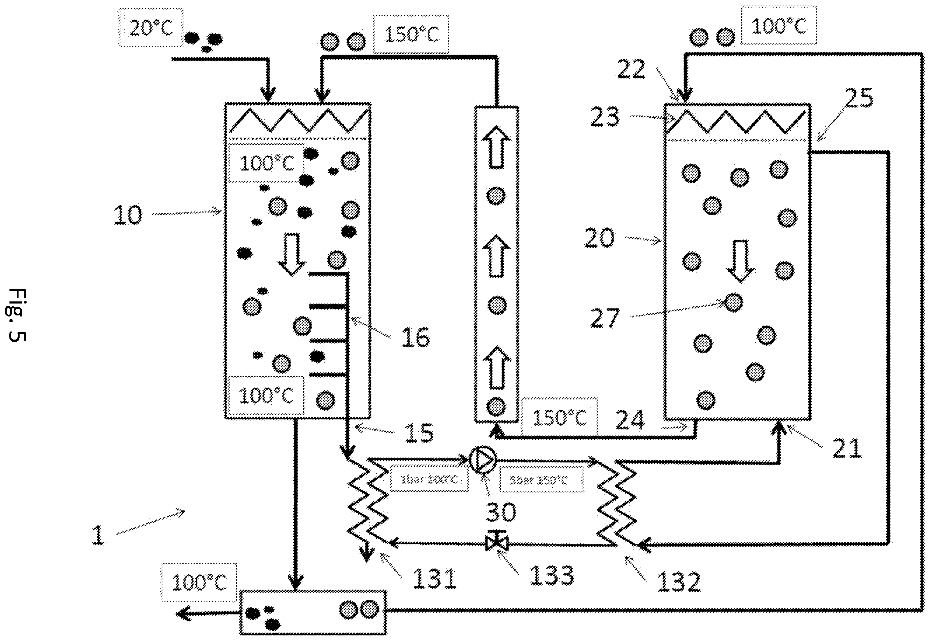

- la figure 5 représente une variante de l'invention mettant en œuvre un fluide caloporteur comprimé et un fluide caloporteur secondaire.

### Exposé d'un mode de réalisation

La présente invention concerne un procédé de séchage de matière humide mettant en œuvre un cycle de changement de phase par évaporation puis condensation, à l'aide d'un média caloporteur mobile.

L'invention est notamment utile dans le cas de la combustion de matière première organique qui peut ainsi avoir un taux d'humidité ajusté de façon à stabiliser les conditions de combustion.

Elle est aussi utile dans le cas de la production de gaz synthétique par gazéification, dit syngaz, par un procédé de pyrolyse et/ou thermolyse et/ou gazéification de matière première organique, grâce à l'ajustement du taux d'humidité qui stabilise les conditions de gazéification. En effet, l'eau est, comme le CO2, un des principaux agents de gazéification du carbone fixe et sa présence en quantité incontrôlée peut être perturbatrice.

Evidemment, tout autre procédé impliquant un séchage de matière humide permettant la séparation de l'eau contenue dans la matière peut utilement employer l'invention. De même, le séchage peut être une séparation d'éléments vaporisables et condensables autres que de l'eau, tels des solvants chimiques, ... .

La notion d'enthalpie englobe la chaleur sensible des fluides et la chaleur latente qui peut être aussi échangée en cas de changement de phase durant l'échange de chaleur. L'enthalpie en jeu lors d'un changement de phase (dite chaleur latente) est souvent très grande et peut représenter 2 à 10 fois plus d'énergie que l'enthalpie en jeu lors de la montée en température avant ou après le changement de phase (dite chaleur sensible). C'est par exemple le cas si un fluide liquide devient gazeux durant l'opération, ou si un fluide gazeux se condense durant l'opération. Ainsi, des fumées issues de la combustion de matière première dans une chaudière contiennent de la vapeur d'eau qui peut avantageusement être condensée en fin de traitement des fumées, avant leur sortie dans l'atmosphère. La chaleur latente ainsi récupérée, au moins partiellement, représente une économie d'énergie qui peut être réutilisée dans un réseau de chaleur. Dans le cadre de l'invention, il s'agit par exemple de faire monter en température et vaporiser l'eau contenue dans la matière première humide et de récupérer la chaleur latente de ce fluide.

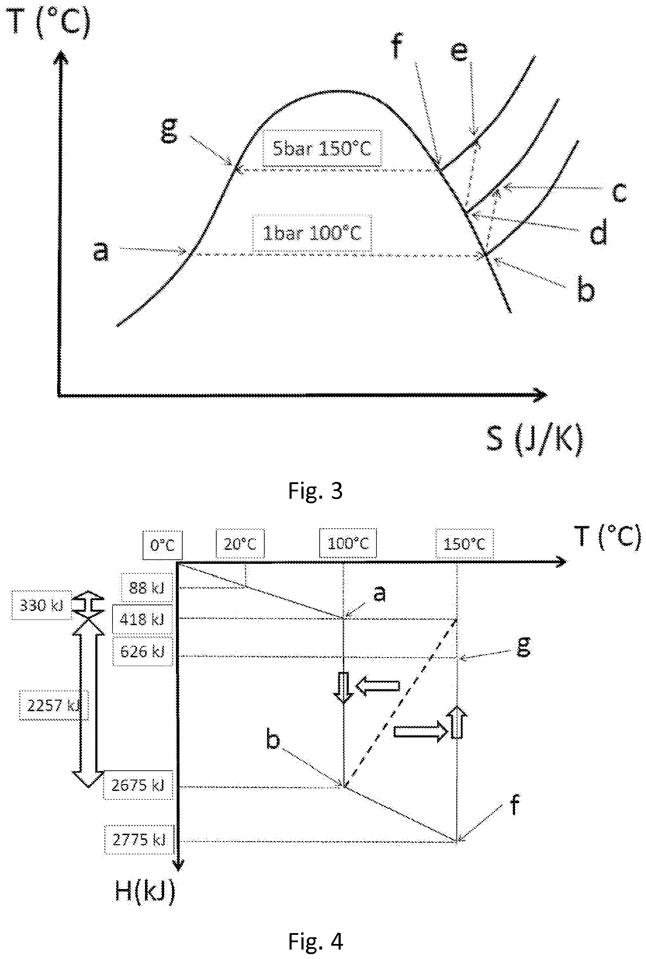

Dans le reste de la description, cet échange sera dénommé échange d'enthalpie, concernant un échange de chaleur sensible seule, ou de chaleur latente seule, ou des deux. La figure 4 et sa description permettront de détailler cette notion.

La notion de séchage concerne la séparation d'eau (ou tout autre élément vaporisable et condensable dans les conditions de pression et température en jeu) contenue dans une matière humide, incluant l'eau en mélange présente aux cotés des particules de matière, l'eau libre présente dans les porosités des éléments de matière et l'eau liée intimement associée à la matière.

L'opération de séchage mettant en œuvre l'invention n'a pas nécessairement vocation à séparer l'ensemble de l'eau de la matière sèche, le taux d'eau séparé étant ajustable à la demande et en fonction des applications. Par exemple, dans le cas de la combustion de bois, un taux d'humidité résiduel de 10% après séchage est très suffisant pour améliorer la performance de la combustion. Il n'est donc pas nécessaire de viser un taux d'humidité plus faible.

Selon un mode de réalisation de l'invention, une masse solide intermédiaire, remplissant un rôle de média caloporteur mobile, est mise en jeu dans un procédé comprenant trois phases :
- durant une première phase dite de vaporisation, une masse mobile préchauffée est mélangée intimement avec une matière humide plus froide qu'elle et lui assure ainsi un apport d'enthalpie suffisant permettant le changement de phase de la quantité d'eau ciblée menant ainsi à sa vaporisation et séparation de la matière. Pour cette raison, le média caloporteur mobile peut être désigné à cette étape comme média de vaporisation. Typiquement cette première phase est réalisée à pression atmosphérique à 100°C, mais une pression différente est possible : soit inférieure, en mode "séchage sous vide", ce qui permet de vaporiser l'eau à moindre température mais qui complique la conception des équipements qui doivent garantir le maintien de ce vide ; soit supérieure, en mode "séchage sous pression", ce qui complique aussi la conception des équipements.
- durant une deuxième phase dite de compression, la vapeur extraite de la matière humide est collectée puis comprimée à une pression supérieure à celle de la première phase, ce qui lui confère une température de saturation (ou condensation) supérieure. Idéalement, dans le cas d'une première phase effectuée à une pression de 1 bar absolu (induisant une température de vaporisation de 100°C environ), cette deuxième phase est effectuée à une pression d'environ 5 bar absolu (induisant une température de saturation de 150°C environ). L'écart de pression entre les deux phases permet de définir l'écart de température entre la vaporisation et la condensation de l'eau contenue dans la matière humide à sécher. Cet écart de pression doit rester avantageusement compris entre 0,2 bar et 10 bar.
- durant une troisième phase dite de condensation, la vapeur pressurisée chaude est mise en contact thermique avec le média caloporteur mobile plus froid, c'est-à-dire qui présente une température inférieure à la température de condensation de cette vapeur pressurisée. Ainsi, pendant cette étape, le média caloporteur mobile peut être désigné média de condensation. Ainsi, l'enthalpie captée par l'eau lors de sa vaporisation est restituée au média lors de sa condensation. La mise en contact thermique peut se faire par le biais d'une circulation de la vapeur pressurisée directement à travers la masse mobile. Ainsi, les échanges thermiques sont très performants grâce aux qualités de porosité et d'inertie thermique de la masse mobile.

Selon une variante de l'invention, afin de limiter la contamination des condensats par les particules de la masse mobile, la vapeur pressurisée peut circuler dans un circuit étanche qui est lui-même plongé dans la masse mobile. Ainsi, l'enthalpie prélevée par l'eau durant la première phase est bien restituée au média durant la troisième phase, mais le média lui-même n'a pas besoin d'être enfermé dans une enceinte pressurisée à la même pression que la vapeur pressurisée. L'équipement est alors moins coûteux.

Selon une autre variante de l'invention, la vapeur obtenue durant la première phase et comprimée est envoyée dans un dispositif auxiliaire de récupération d'enthalpie, par exemple dans un hydrocondenseur à plaque ou tout type d'équipement analogue. Cet hydrocondenseur est alimenté par un fluide caloporteur auxiliaire froid qui se réchauffe grâce à la vapeur comprimée, permet la condensation de cette dernière et est ensuite envoyé en contact thermique, direct ou indirect, avec la masse mobile utilisée lors de la première phase afin de permettre le réchauffement de cette dernière. Le bilan enthalpique est bien respecté mais en faisant intervenir un fluide auxiliaire à la place de la masse mobile de la troisième phase.

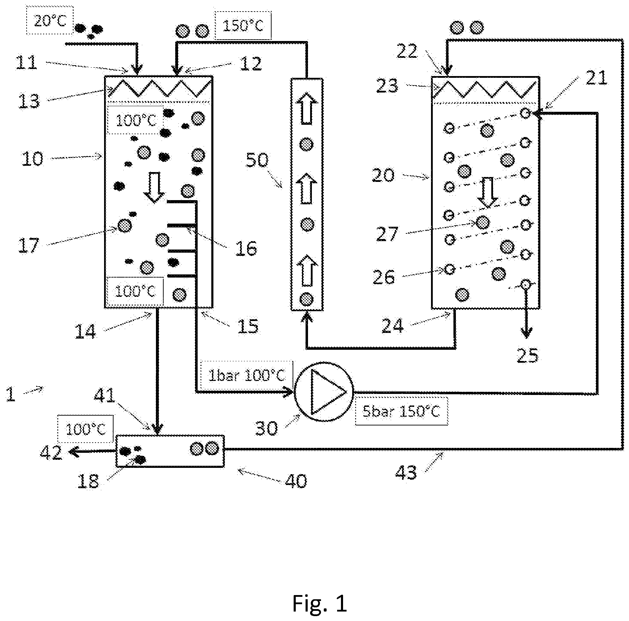

Selon une variante de l'invention, la masse mobile utilisée en première phase et la masse mobile utilisée en troisième phase sont les mêmes, comme cela sera décrit en figure 1. Ainsi, cette masse permet successivement d'apporter ou de récupérer de l'enthalpie, ce qui limite la complexité des équipements.

Selon une variante de l'invention, la première phase dite de vaporisation est précédée d'une phase de réchauffement de la matière à sécher, de façon à lui permettre d'approcher de la température de début de vaporisation, conditionnée par la pression appliquée. Par exemple, avec une pression de 1 bar absolu induisant une température de vaporisation proche de 100°C, le préchauffage peut être effectué jusqu'à 99°C, de sorte que la première phase mette en jeu principalement de l'enthalpie de changement de phase à 100°C.

Selon une autre variante de l'invention, durant la phase de vaporisation, de la vapeur complémentaire est introduite dans l'enceinte avec une pression et/ou un débit contrôlé, afin de minimiser l'introduction d'air extérieur dans cette enceinte par ses connections avec l'extérieur. En effet, cet air extérieur perturberait la compression de vapeur. Par exemple, il est avantageux de garantir une recirculation de vapeur qui permette de contenir le taux d'air parasite dans l'enceinte à moins de 5% du volume gazeux total disponible, le reste étant occupé par de la vapeur.

La masse mobile ou média caloporteur mobile, est constituée d'un ensemble de particules individuelles solides qui sont utilisées sans cohésion entre elles. On obtient ainsi un amas de particules dont la taille et la forme permet un écoulement naturel par l'effet de la gravité.

La masse est un média caloporteur mobile, car elle joue un rôle d'intermédiaire qui va se réchauffer et se refroidir sous l'influence des échanges d'enthalpie en jeu.

Le stockage de chaleur ou inertie thermique est une des caractéristiques de l'invention. En effet, le média caloporteur mobile doit notamment disposer d'une densité et d'une capacité thermique massique exprimée dans l'unité J/(kg.K) qui lui permettent d'accumuler suffisamment d'enthalpie sous l'effet de sa montée en température. De façon avantageuse, il faut disposer d'un média ayant une densité élevée, par exemple supérieure à 3000 kg/m³ et une capacité thermique massique elle aussi élevée, par exemple supérieure à 500 J/(kg.K). Ainsi, l'enthalpie totale que le média caloporteur mobile peut stocker et restituer est suffisante pour permettre un fonctionnement efficace avec un équipement d'une taille économique dans une plage raisonnable de températures, c'est-à-dire inférieures à 300°C.

Par exemple, comme indiqué sur la figure 4, l'enthalpie nécessaire pour élever la température d'un kg d'eau à pression atmosphérique depuis 20°C jusqu'à 100°C (soit sa chaleur sensible) est de 330 kJ, puis pour la vaporiser sous cette même pression l'enthalpie à ajouter est de 2257 kJ, soit près de 7 fois plus. Selon l'invention, cette enthalpie est apportée par le média qui doit évidemment avoir une température supérieure à celle de l'eau qui se vaporise à 100°C, et ceci durant toute la durée de l'échange d'enthalpie. Comme indiqué sur la figure 4, une solution consiste à mélanger la matière humide préchauffée à 99°C ou 100°C avec 50 kg de média, par exemple des billes d'alumine, ayant une chaleur massique de 900 J/(kg.K) et une température de 150°C. Le média peut alors apporter une enthalpie totale de : $\left(50 kg\right) \times \left(900 J/kg.K\right) \times \left(150-100°C\right) = 2250 kJ$ soit exactement l'enthalpie requise pour vaporiser 1 kg d'eau contenue dans la matière humide.

Evidemment, le dimensionnement industriel d'une installation doit prendre en compte les pertes énergétiques possibles, la chaleur sensible de la matière, ... , ce qui oblige à surdimensionner la quantité ou la température du média. Toutefois, le principe de l'invention reste l'usage d'un média caloporteur mobile dont l'enthalpie initiale est suffisante pour procéder à l'évaporation de la quantité d'eau ciblée.

Sur cette même figure 4, on a indiqué l'évolution inverse, soit la condensation d'une vapeur d'eau ayant une température de 150°C et sous une pression de 5 bar, ce qui lui confère une enthalpie de 2775 kJ/kg. Selon l'invention, le média caloporteur mobile peut être employé comme source froide à une température initiale de 100°C, mis en contact avec la vapeur. L'énergie échangée provoque alors la condensation de la vapeur le long de l'isotherme de 150°C et le média se réchauffe en proportion. Les condensats obtenus sont liquides, sous une pression de 5 bar et une température de 150°C.

L'invention peut mettre en œuvre le même média qui subit un cycle de réchauffage à 150°c puis refroidissement à 100°C et ainsi de suite, ou un média différent qui échange ensuite séparément l'enthalpie captée avec d'autres dispositifs.

L'invention s'applique aussi pour des températures, pressions ou fluides différents, du moment qu'un phénomène d'évaporation et de condensation puisse être mis en œuvre en collaboration avec un média solide mobile.

Selon une variante de l'invention, le média caloporteur mobile peut contenir une matière qui change de phase durant son utilisation de façon à profiter aussi de la chaleur latente de changement de phase de cette matière, ce qui permet de disposer aussi d'une plus grande inertie thermique. Par exemple, un média comprenant des billes creuses en acier remplies d'un matériau à changement de phase dont la température de transition est de 125°C et la chaleur latente de 2250 kJ pour la masse en jeu, utilisées comme média unique pour une première phase de vaporisation à 1 bar absolu - 100°C et pour une troisième phase de condensation à 5 bar absolu - 150 °C, peut efficacement participer à chaque phase tout en restant constamment à une température de 125°C, d'une part, lors de l'échange 125°C-100°C et, d'autre part, lors de l'échange contraire 125°C-150°C.

Un autre avantage de l'invention est que le média caloporteur mobile, grâce à la porosité qu'il assure, permet une évacuation rapide de la vapeur générée pour ne pas laisser croître localement la pression de vapeur, ce qui freinerait le séchage par une augmentation de la température de vaporisation. Ce résultat peut être notamment obtenu par l'utilisation d'un média présentant de nombreuses cavités facilement traversées par le fluide. Par exemple, un média constitué de billes perforées sur 25% de leur volume garantit une porosité (ratio du volume de vide sur le volume total solide + vide) de plus de 50% et donc une bonne circulation de la vapeur dans toute la zone d'échange d'enthalpie. Cela est aussi important si la matière humide mélangée au média transporte des petites particules «encrassantes» qui peuvent se déposer dans le média et causer un bouchage progressif des cavités dans lesquelles circule la vapeur.

Selon une variante de l'invention, il est possible d'utiliser de simples sphères, dont l'entassement dans un volume donné permet de conserver des porosités entre les sphères et de laisser un passage libre pour la vapeur.

De plus, la puissance d'échange est améliorée si le média caloporteur mobile présente une bonne diffusivité, c'est-à-dire si le matériau qui le constitue présente une forte capacité à transférer de la chaleur. Le coefficient de diffusivité défini par D = lambda / ro / C (où lambda = conductivité thermique, ro = masse volumique et C = capacité thermique massique) est préférentiellement supérieur à 0,2 10⁻⁶ m²/s.

De plus, la géométrie des éléments du média caloporteur mobile est préférentiellement définie afin de s'assurer de la présence d'une grande surface développée, ladite surface étant le siège de l'échange de chaleur. Ainsi, il est avantageux que les éléments du média caloporteur mobile présentent une surface développée importante et une épaisseur de matière faible afin de faciliter les échanges d'enthalpie. Le paramètre de compacité préféré, défini comme le ratio de la surface développée sur le volume solide, est supérieur à 3 m²/m³ ce qui correspond, par exemple, à des particules en forme de bille de diamètre 30 mm et percée de 2 trous orthogonaux de diamètre 10 mm.

Selon une variante de l'invention, la puissance d'échange est améliorée si un fluide d'assistance circule à travers le média caloporteur mobile, lors de l'étape de vaporisation, afin d'accentuer la performance des échanges thermiques par convection en surface du média. Le fluide d'assistance peut être de la vapeur recirculée maintenue en permanence en condition de surchauffe, c'est-à-dire à une température supérieure à la température de saturation associée à sa pression, afin de permettre la vaporisation et l'enlèvement continus de l'eau qui migre à la surface de la matière à déshydrater. Par exemple, le dimensionnement du dispositif veillera à garantir une vitesse d'écoulement du fluide d'assistance supérieure à 0,1 m/s, ou de façon préférée supérieure à 1 m/s ou de façon encore plus préférée supérieure à 2 m/s.

Toujours selon l'invention, le média caloporteur mobile doit supporter les contraintes de fonctionnement apportées par les matières et vapeurs utilisés. Par exemple, si la matière humide contient des composés volatils soufrés ou chlorés, lors de la condensation de la vapeur d'eau en mélange avec des composés, de l'acide sulfurique ou chlorhydrique peut se former et corroder rapidement le média de transfert. Il peut alors être avantageux que le matériau le constituant soit choisi de façon à résister à un pH inférieur à 3.

Enfin, selon un mode de réalisation préféré de l'invention, le média caloporteur mobile est mis en mouvement de circulation lente à l'intérieur de l'enceinte de l'échangeur, ce qui suppose que le média caloporteur mobile est bien composé de particules individuelles qui peuvent être déplacées sans blocage mécanique et sans forces d'adhésion importantes, ce qui transformeraient le média mobile en un seul bloc difficile ou impossible à déplacer. Cette circulation du média se fait depuis un point d'entrée vers un point de sortie de l'enceinte dans laquelle s'effectue l'échange d'enthalpie. Ainsi, durant la première phase de vaporisation, le média est introduit chaud et transfère son enthalpie à la matière humide en même temps qu'il se déplace vers son point de sortie. Il ressortira alors plus froid et pourra être récupéré afin d'être introduit dans une autre enceinte et y subir la troisième phase de condensation.

De façon avantageuse, cette circulation est homogène, c'est-à-dire qu'en tout point de l'enceinte, la vitesse de circulation du média est la même, de sorte que les échanges d'enthalpie et les températures sont équilibrés en tout point de l'enceinte.

De plus, cette circulation est lente car son intérêt est d'obtenir des échanges d'enthalpie stables et le coût énergétique que représenterait un déplacement rapide d'une grande masse de média serait rédhibitoire. Par exemple, l'utilisation d'un lit fluidisé de sable n'est pas intéressant dans le cadre de l'invention. Ainsi, les particules du média sont déplacées à une vitesse inférieure à 0,1 m/s et de façon préférée inférieure à 0,01 m/s.

Il est aussi avantageux que les éléments constituant le média de transfert aient une résistance mécanique suffisante pour supporter le poids de l'empilage effectué, surtout en partie basse.

Il est aussi préférable que la mise en mouvement éventuelle de ces éléments ne les brise ni ne les abrase trop vite, afin de limiter leur taux de remplacement, suite à une usure inévitable.

Selon l'invention, les éléments du média appliquent leur poids sur la matière humide qui est mélangée avec. Ainsi, les particules de matière humide sont soumises à une pression durant toute leur migration depuis l'entrée dans l'enceinte vers la sortie. Cette pression assiste le phénomène d'évaporation de l'eau présente dans la matière humide car les pores de la matière, remplis d'eau, sont comprimés ce qui facilite l'expulsion mécanique de l'eau présente, qui est ensuite vaporisée par la chaleur apportée par les éléments de média.

Ainsi, le média caloporteur mobile est composé de particules individuelles qui peuvent être des billes ou des éléments individuels de type anneau de Raschig, selle de Perl, ... , qui sont placés en tas dans l'enceinte de l'échangeur.

De façon avantageuse, les particules sont de forme globalement sphérique. La forme sphérique facilite la circulation des éléments dans l'enceinte sans qu'un effet de blocage de particules entre elles ne puisse advenir.

D'autres formes sont aussi envisageables, du moment qu'elles respectent le cahier des charges décrit supra.

Ainsi, l'empilage du média caloporteur mobile est préférentiellement mécaniquement résistant, poreux pour la circulation de la vapeur, massif pour améliorer l'inertie thermique, disposant d'une grande surface développée pour garantir un échange thermique efficace et d'une conductivité thermique permettant d'accélérer les transferts thermiques.

Selon l'invention, comme représenté en figure 1, le dispositif 1 comprend une enceinte d'évaporation 10 dans laquelle le média de vaporisation 17 est déversé par le biais d'une entrée de média de vaporisation 12, une entrée 11 de matière humide, un moyen de mélange et de répartition 13 de la matière "humide" et du média de vaporisation, et une sortie 14 du média de vaporisation et de la matière "sèche", c'est-à-dire moins humide qu'à l'entrée 11. L'enceinte d'évaporation 10 comprend aussi un réseau de captation de vapeur 16 et une sortie de vapeur 15. L'enceinte d'évaporation 10 est de préférence calorifugée de façon à minimiser les fuites thermiques qui pourraient affecter la performance des échanges d'enthalpie.

Selon ce mode de réalisation de l'invention, le dispositif 1 comprend aussi une enceinte de condensation 20 dans laquelle le média de condensation 27 est déversé par le biais d'une entrée 22 de média de condensation, une entrée 21 de vapeur pressurisée à condenser, un moyen de répartition 23 de média de condensation et une sortie 24 du média de condensation. L'enceinte de condensation 20 comprend aussi un réseau de circulation 26 de vapeur pressurisée et une sortie de condensats pressurisés 25. L'enceinte de condensation 20 est de préférence calorifugée de façon à minimiser les fuites thermiques qui pourraient affecter la performance des échanges d'enthalpie. Avantageusement, l'enceinte de condensation 20 est étanche et apte à subir une pression interne au moins équivalente à celle de la vapeur ou du fluide caloporteur secondaire. Cette étanchéité peut être notamment assurée par la présence de vannes au niveau de l'entrée 22 et de la sortie 24 de média de condensation. Dans ce cas, l'étape de condensation peut être avantageusement effectuée par lots *(batch).* Dans ce dernier mode de réalisation, l'enceinte de condensation 20 est remplie de média de condensation, les vannes sont fermées, puis l'enceinte est mise sous pression préalablement ou concomitamment à l'injection de la vapeur ou du fluide caloporteur pressurisée. Une fois la condensation obtenue, l'enceinte de condensation est ramenée à pression ambiante et le média de condensation est évacué pour être utilisé dans le reste du procédé selon l'invention.

Selon l'invention, le média de vaporisation 17 est introduit dans l'enceinte d'évaporation 10 à une température supérieure à celle de la vaporisation de l'eau, et a fortiori à celle de la matière "humide", et est mélangé avec celle-ci, le mélange étant réparti de façon homogène à l'aide du moyen de mélange et de répartition 13. Ce dernier peut être une vis d'Archimède ou toute solution équivalente évidente à l'homme de l'art. Puis, le mélange circule vers la sortie 14, de préférence verticalement, sous l'effet de la gravité. Durant le séjour dans l'enceinte d'évaporation 10, l'enthalpie apportée par le média de vaporisation 17 est transmise à la matière humide afin de permettre l'échauffement et l'évaporation de l'eau à évaporer, tel qu'indiqué en figure 4. Les vapeurs sont collectées par le réseau de captation de vapeur 16 et évacuées par la sortie 15.

Selon l'invention, en fin de traitement d'évaporation, le mélange du média 17 et de la matière sèche 18 quitte l'enceinte 10 par la sortie 14 et entre dans un moyen de séparation 40 par une entrée 41. Ce moyen de séparation 40 a pour fonction de séparer la matière sèche et le média. Il peut s'agir d'un crible à trous, d'un crible à effet magnétique, avantageusement de type overband, d'un crible balistique, d'un crible à effet de courant de Foucault ou toute autre technique connue de l'homme de l'art, selon la nature des éléments à séparer.

Selon une variante de l'invention, le moyen de séparation 40 peut être un moyen de combustion dont le combustible est la matière sèche et dont le comburant est de l'air. Ainsi, le mélange de média 17 et de la matière sèche 18 est introduit dans le moyen de combustion, la matière sèche 18 est brûlée et le média 17 incombustible assiste la combustion par sa capacité à augmenter l'inertie des échanges d'enthalpie dans le foyer, ce qui a l'avantage de stabiliser les réactions de combustion. A l'issue de la combustion, seuls restent le média 17 et des cendres minérales qui peuvent être séparées du média par tout moyen connu de l'homme de l'art.

Selon une autre variante de l'invention, le moyen de séparation peut être un moyen de thermolyse et/ou de gazéification dont la matière première est la matière séchée 18 dans le cadre de l'invention. Le média 17 pénètre aussi dans le moyen de thermolyse et/ou de gazéification et assiste le procédé de transformation de la matière par sa capacité à augmenter l'inertie des échanges d'enthalpie en jeu. A l'issue de la thermolyse et/ou de gazéification, la matière a été transformée et seuls restent le média 17 et des cendres minérales qui peuvent être séparées du média par tout moyen connu de l'homme de l'art.

Pour assurer la deuxième phase du procédé selon l'invention, les vapeurs évacuées par la sortie 15 sont introduites dans un moyen de compression 30, ce qui permet d'accroitre la pression et la température des vapeurs.

Selon une variante de l'invention, cette compression peut être effectuée en plusieurs étapes. Tel qu'indiqué en figure 3, l'eau s'évapore durant son séjour dans l'enceinte d'évaporation 10 depuis le point caractéristique a sur le diagramme température = f(entropie) vers le point caractéristique b. Lors de la compression, le rendement du compresseur crée une évolution non isentropique donc vers le point c. Comme l'objectif est d'atteindre le point f représentatif d'une pression de 5 bar et d'une température de 150°C, il est plus avantageux de procéder à une compression en deux étapes ou plus, l'une du point b vers le point c, puis une autre du point d vers le point e. Le déplacement de c vers d et de e vers f est obtenu par désurchauffe avec introduction d'eau dans le circuit de compression. La désurchauffe permet ainsi de limiter des températures de vapeur élevées, ce qui aurait pour effet de rendre plus complexe et onéreuse la compression du fait des problèmes de dilatation et de tenue des aciers du compresseur aux températures élevées. Une compression de 1 à 5 bar absolu avec un compresseur ayant un rendement isentropique de 70%, et une vapeur saturée à l'entrée, impliquerait la production de vapeur surchauffée à 360°C environ. Ainsi, avec la mise en place de la désurchauffe intermédiaire, la vapeur après compression est peu surchauffée et est prête à subir l'étape de condensation. Pour une application à 5 bar absolu en sortie de compresseur, la température de saturation est de 151°C.

Une alternative est d'assurer la désurchauffe dans le corps même du compresseur par injection d'eau, ou bien par refroidissement continu du corps du compresseur.

Alternativement, la vapeur obtenue durant la première phase est envoyée dans un dispositif auxiliaire de récupération d'enthalpie, par exemple dans un hydrocondenseur à plaque 131 ou tout type d'équipement analogue. Cet hydrocondenseur est alimenté par un fluide caloporteur auxiliaire froid qui se réchauffe grâce à la vapeur, permet la condensation de cette dernière. Ensuite, le fluide caloporteur auxiliaire est comprimé (e.g. via une pompe 130) de façon analogue à ce qui est décrit dans les modes de réalisations précédents pour la vapeur. Le fluide caloporteur auxiliaire est ensuite envoyé en contact thermique, direct ou indirect, avec le média de condensation afin de permettre le réchauffement de ce dernier. Dans un mode de réalisation préféré de l'invention, le fluide caloporteur auxiliaire transfère son enthalpie, via un échangeur 132 vers un fluide caloporteur secondaire qui transfère ensuite son enthalpie vers le média de condensation. Ce transfert se fait avantageusement via un contact direct entre le fluide caloporteur secondaire et le média caloporteur de condensation dans l'enceinte de condensation 20. Dans un autre mode de réalisation préféré de l'invention, le fluide caloporteur auxiliaire est mis en contact direct avec le média de condensation dans l'enceinte de condensation puis est récupéré est renvoyé vers l'échangeur 131.

Pour assurer la troisième phase du procédé selon l'invention, la vapeur comprimée eou le fluide caloporteur est introduit dans l'enceinte 20 par l'entrée 21. D'autre part, le média de condensation 27 est introduit dans l'enceinte 20 à une température inférieure à celle de la vapeur comprimée ou du fluide caloporteur, et est réparti de façon homogène à l'aide du moyen de répartition 23. Ce dernier peut être une vis d'Archimède ou toute solution équivalente connue de l'homme de l'art. Puis, le média de condensation 27 circule vers la sortie 24, de préférence verticalement sous l'effet de la gravité. Durant cette circulation, l'enthalpie apportée n est transmise au média de condensation 27 ce qui cause le refroidissement et la condensation de la vapeur ou du fluide caloporteur, tel qu'indiqué en figure 4. Les condensats pressurisés sont évacués par la sortie 25.

Selon l'invention, il est avantageux de transférer le média de condensation 27 ainsi réchauffé depuis l'enceinte 20 par la sortie 24 vers l'enceinte 10 par l'entrée 12. Le moyen de transfert de média 50 peut être un élévateur à godet, une vis d'Archimède, ou toute autre solution de transfert évidente à l'homme de l'art. Le débit de média transféré peut avantageusement être variable et régulé à l'aide de toute technologie adaptée comme, par exemple, un automate associé à un variateur de fréquence commandant la rotation d'un moteur électrique faisant tourner une vis d'Archimède.

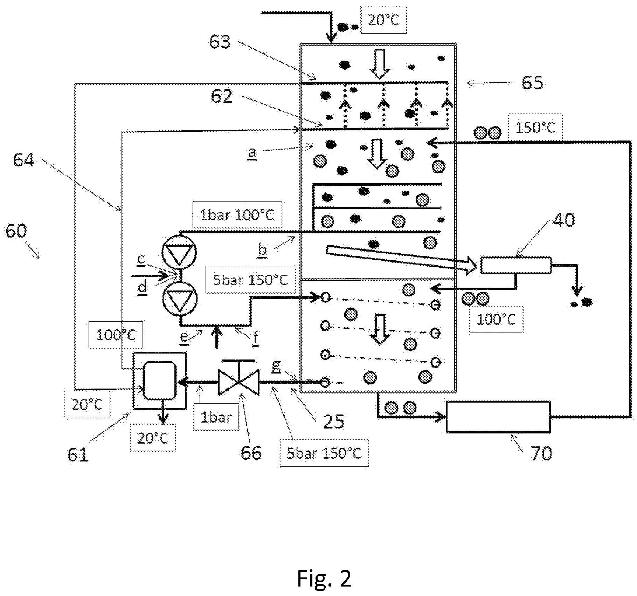

La figure 2 représente une variante de l'invention dans laquelle un moyen économiseur 60 est utilisé afin de récupérer l'enthalpie des condensats pressurisés chauds depuis la sortie 25. Ces condensats pressurisés sont introduits dans un échangeur 61, éventuellement après la détente de leur pression à l'aide d'un détendeur 64, dans lequel ils transmettent leur enthalpie à un fluide auxiliaire 64, typiquement de l'air, qui est ensuite introduit dans une enceinte économiseur 65 remplie de matière humide froide. Un moyen de répartition d'alimentation 62 de ce fluide auxiliaire est avantageusement disposé en partie basse de l'enceinte économiseur 65 et un moyen de répartition de captation 63 de ce même fluide auxiliaire est disposé en partie haute de l'enceinte 65. Ainsi, le fluide auxiliaire apporte dans la matière humide la chaleur captée aux condensats. Selon une variante de l'invention, le fluide auxiliaire peut être un liquide caloporteur circulant dans l'enceinte économiseur de façon étanche, par exemple à travers un réseau de serpentins ou d'échangeurs à plaques.

Selon une variante de l'invention, les médias caloporteurs 17 et 27 sont régulièrement extraits de l'enceinte 10 respectivement 20 afin de leur prodiguer des traitements spécifiques.

Par exemple, les particules du média sont nettoyées afin de séparer et évacuer des dépôts collectés durant le transfert dudit média dans les enceintes du dispositif 1. Ce nettoyage peut être effectué dans un bain d'eau pure ou additivée d'agents de nettoyage tels des surfactants, ou dans un bain de solvant, ou sous une douche d'eau ou de solvant, ou sous un jet de gaz de nettoyage ou de vapeur, telle de la vapeur d'eau, ou par soufflage d'air comprimé.

Une variante de nettoyage peut utiliser un dispositif de nettoyage par vibrations, notamment afin de séparer des poussières adhérant aux particules de média en les faisant circuler sur un tamis vibrant, ou tout autre dispositif de nettoyage par vibrations, ou tout autre dispositif à haute fréquence, tels des ultrasons, avec l'appoint éventuel d'un bain de liquide nettoyant.

Il convient aussi de séparer, de manière continue ou périodique, les particules de média de transfert en bon état de celles qui sont usées, brisées et qui ne peuvent plus remplir leur fonction. Pour cela, le passage des particules de média caloporteur mobile dans un moyen de criblage, du type tamis vibrant ou tambour rotatif, est avantageux.

Cette opération de criblage peut être combinée à l'opération de nettoyage des particules de média.

## Revendications

1. Procédé de séparation entre de l'eau et un solide, par évaporation partielle ou totale de l'eau, comprenant :
- une étape (i) où de la matière humide est mélangée avec des particules solides indépendantes formant un média de vaporisation (17), dont la température est supérieure à celle de ladite matière humide,- une étape (ii) où le mélange produit à l'étape (i) est introduit dans une enceinte de vaporisation (10) comprenant un réseau de captation de vapeur (16) et une sortie de vapeur (15) dans laquelle la chaleur apportée par lesdites particules solides indépendantes formant le média de vaporisation à la matière humide permet la vaporisation d'une partie de l'eau introduite,
- une étape (iii) où la vapeur produite à l'étape (ii) est introduite dans un moyen de compression (30) où elle est captée et comprimée, de sorte à obtenir une vapeur ayant une plus haute pression et donc une plus haute température,
- une étape (iv) où ladite vapeur comprimée est condensée et transmet son enthalpie à des particules solides indépendantes, formant un média caloporteur de condensation, placées dans une enceinte de condensation (20), comprenant un réseau de circulation (26) de vapeur pressurisée et une sortie de condensats pressurisés (25), à une pression supérieure à la pression atmosphérique, de sorte que ladite vapeur comprimée se condense sous forme liquide,
où les particules solides indépendantes formant le média caloporteur de condensation sont transférées depuis l'enceinte de condensation, par une sortie (24), vers l'enceinte de vaporisation (10) , par une entrée (12), avant leurs utilisations à l'étape (i) et où le mélange produit à l'étape (i) circule dans l'enceinte (10), lors de l'étape (ii), depuis un point haut vers un point bas en tout ou partie sous l'effet de son propre poids et en ce que l'étape (iv) est suivie d'une étape d'évacuation, de ladite enceinte de condensation, de tout ou partie du liquide formé par la condensation de la vapeur comprimée et d'une étape de décompression de l'enceinte de condensation (20).

2. Procédé de séparation entre de l'eau et un solide, par évaporation partielle ou totale de l'eau, comprenant :
- une étape (i) où de la matière humide est mélangée avec des particules solides indépendantes formant un média de vaporisation (17), dont la température est supérieure à celle de ladite matière humide,
- une étape (ii) où le mélange produit à l'étape (i) est introduit dans une enceinte de vaporisation (10), comprenant un réseau de captation de vapeur (16) et une sortie de vapeur (15), dans laquelle la chaleur apportée par les particules solides indépendantes formant le média de vaporisation à la matière humide permet la vaporisation d'une partie de l'eau introduite,
- une étape (iii) où la vapeur produite à l'étape (ii) est envoyée dans un dispositif auxiliaire de récupération d'enthalpie qui est alimenté par un fluide caloporteur auxiliaire froid, qui se réchauffe grâce à la vapeur et permet la condensation de cette dernière, ledit fluide caloporteur auxiliaire est ensuite comprimé, de sorte à obtenir un fluide caloporteur auxiliaire ayant une plus haute pression et donc une plus haute température,
- une étape (iv) où ledit fluide caloporteur auxiliaire comprimé est envoyé en contact direct ou indirect ,dans une enceinte de condensation (20) avec des particules solides indépendante formant un média caloporteur de condensation, de sorte que ledit fluide caloporteur auxiliaire comprimée se condense sous forme liquide, où lesdites particules solides indépendantes formant le média caloporteur de condensation sont transférées depuis l'enceinte de condensation (20), par une sortie (3), vers l'enceinte de vaporisation (10), par une entrée (12), de sorte à former le média de vaporisation (17) avant son utilisation à l'étape (i) et où le mélange produit à l'étape (i) circule dans l'enceinte, lors de l'étape (ii), depuis un point haut vers un point bas de ladite enceinte (10), en tout ou partie sous l'effet de son propre poids.

3. Procédé selon la revendication 1 à 2, **caractérisé en ce que** le mélange de média de vaporisation (17) et de matière traitée (18) subit une étape de séparation, de sorte que les particules du média soient recirculées dans le procédé et la matière traitée (18) soit sortie du procédé.

4. Procédé selon la revendication 1 à 2, **caractérisé en ce que** les particules du média d'évaporation (17) sont incombustibles et **en ce que** le mélange de média d'évaporation (17) et de matière traitée (18) subit une étape de combustion, à l'issue de laquelle les particules du média imbrulées sont séparées des cendres de la combustion et sont recirculées dans le procédé.

5. Procédé selon la revendication 1 à 2, **caractérisé en ce que** les particules du média évaporateur (17) sont incombustibles et **en ce que** le mélange de média d'évaporation (17) et de matière traitée (18) subit une étape de thermo-gazéification, à l'issue de laquelle les particules du média imbrulées sont séparées des cendres de la thermo-gazéification et sont recirculées dans le procédé.

6. Procédé selon l'une des revendications précédentes, **caractérisé en ce que**, lors de l'étape (i), un fluide d'assistance circule à travers le média (17, 27), de sorte que les échanges thermiques par convection soient améliorés.

7. Procédé selon la revendication précédente, **caractérisé en ce que** le fluide d'assistance circule à une vitesse supérieure à 0,1 m/s.

8. Procédé selon l'une des revendications 2 à 7, **caractérisé en ce que** durant l'étape (iv) ledit média caloporteur de condensation, formé de particules solides indépendantes, est dans ladite enceinte de condensation, à une pression supérieure à la pression atmosphérique.

## Patentansprüche

1. Verfahren zur Trennung zwischen Wasser und einem Feststoff durch Teil- oder Vollverdampfung des Wassers, Folgendes umfassend:
- einen Schritt (i), bei dem feuchtes Material mit unabhängigen Feststoffpartikeln vermischt wird, die ein Verdampfungsmedium (17) bilden, dessen Temperatur höher als jene des feuchten Materials ist, - einen Schritt (ii), bei dem das in Schritt (i) erzeugte Gemisch in einen Verdampfungsraum (10) eingebracht wird, der ein Dampfauffangnetz (16) und einen Dampfausgang (15) umfasst, wobei die Wärme, die durch die unabhängigen Feststoffpartikel, die das Verdampfungsmedium bilden, zum feuchten Material zugeführt wird, die Verdampfung eines Teils des eingebrachten Wassers ermöglicht,
- einen Schritt (iii), bei dem der in Schritt (ii) erzeugte Dampf in ein Komprimierungsmittel (30) eingebracht wird, wo er aufgefangen und komprimiert wird, um einen Dampf zu erhalten, der einen höheren Druck, und somit eine höhere Temperatur aufweist,
- einen Schritt (iv), bei dem der komprimierte Dampf kondensiert wird und seine Enthalpie auf die unabhängigen Feststoffpartikel überträgt, die ein Kondensationswärmeüberträgermedium bilden, die in einem Kondensationsraum (20) platziert sind, ein Zirkulationsnetz (26) für den unter Druck gesetzten Dampf und einen Ausgang für unter Druck gesetzte Kondensate (25) umfassend, auf einem Druck, der höher als der atmosphärische Druck ist, sodass der komprimierte Dampf in flüssiger Form kondensiert,
wobei die unabhängigen Feststoffpartikel, die das Kondensationswärmeüberträgermedium bilden aus dem Kondensationsraum durch einen Ausgang (24) zum Verdampfungsraum (10) durch einen Eingang (12) vor deren Verwendungen in Schritt (i) überstellt werden, und wobei
das in Schritt (i) erzeugte Gemisch im Schritt (ii) in dem Raum (10) von einem oberen Punkt zu einem unteren Punkt, vollkommen oder teilweise unter der Wirkung seines Eigengewichts zirkuliert, und dadurch, dass auf den Schritt (iv) ein Ausbringungsschritt, aus dem Kondensationsraum, der gesamten, durch die Kondensation des komprimierten Dampfes gebildeten Flüssigkeit oder eines Teils davon, und ein Schritt der Dekomprimierung des Kondensationsraumes (20) folgt.

2. Verfahren zur Trennung zwischen Wasser und einem Feststoff durch Teil- oder Vollverdampfung des Wassers, umfassend:
- einen Schritt (i), bei dem feuchtes Material mit unabhängigen Feststoffpartikeln vermischt wird, die ein Verdampfungsmedium (17) bilden, dessen Temperatur höher als jene des feuchten Materials ist,
- einen Schritt (ii), bei dem das in Schritt (i) erzeugte Gemisch in einen Verdampfungsraum (10) eingebracht wird, der ein Dampfauffangnetz (16) und einen Dampfausgang (15) umfasst, wobei die Wärme, die durch die unabhängigen Feststoffpartikel, die das Verdampfungsmedium bilden, zum feuchten Material zugeführt wird, die Verdampfung eines Teils des eingebrachten Wassers ermöglicht,
- einen Schritt (iii), bei dem der in Schritt (ii) erzeugte Dampf in eine Hilfsvorrichtung zur Enthalpie-Rückgewinnung geschickt wird, die durch ein kaltes Hilfswärmeüberträgerfluid versorgt wird, das sich dank des Dampfes erwärmt, und die Kondensation von letzterem ermöglicht, wobei das Hilfswärmeüberträgerfluid danach komprimiert wird, um ein Hilfswärmeüberträgerfluid zu erhalten, das einen höheren Druck, und somit eine höhere Temperatur aufweist,
- einen Schritt (iv), bei dem das komprimierte Hilfswärmeüberträgerfluid in direktem oder indirektem Kontakt in einen Kondensationsraum (20) mit unabhängigen Feststoffpartikeln, die ein Kondensationswärmeüberträgermedium bilden, geschickt wird, sodass das komprimierte Hilfswärmeüberträgerfluid in flüssiger Form kondensiert, wobei die unabhängigen Feststoffpartikel, die das Kondensationswärmeüberträgermedium bilden, aus dem Kondensationsraum (20) durch einen Ausgang (3) zum Verdampfungsraum (10) durch einen Eingang (12) überstellt werden, um das Verdampfungsmedium (17) vor seiner Verwendung in Schritt (i) zu bilden, und wobei das in Schritt (i) erzeugte Gemisch im Schritt (ii) von einem oberen Punkt zu einem unteren Punkt des Raumes (10), vollkommen oder teilweise unter der Wirkung seines Eigengewichts zirkuliert.

3. Verfahren nach Anspruch 1 bis 2, **dadurch gekennzeichnet, dass** das Gemisch aus Verdampfungsmedium (17) und behandeltem Material (18) einen Trennungsschritt erfährt, sodass die Partikel des Mediums in dem Verfahren umgewälzt werden und das behandelte Material (18) aus dem Verfahren ausgebracht wird.

4. Verfahren nach Anspruch 1 bis 2, **dadurch gekennzeichnet, dass** die Partikel des Verdampfungsmediums (17) nicht brennbar sind, und dadurch, dass das Gemisch aus Verdampfungsmedium (17) und behandeltem Material (18) einen Verbrennungsschritt erfährt, an dessen Ende die nicht verbrannten Partikel des Mediums von der Asche der Verbrennung getrennt werden und in dem Verfahren umgewälzt werden.

5. Verfahren nach Anspruch 1 bis 2, **dadurch gekennzeichnet, dass** die Partikel des Verdampfungsmediums (17) nicht brennbar sind, und dadurch dass das Gemisch aus Verdampfungsmedium (17) und behandeltem Material (18) einen Wärmevergasungsschritt erfährt, an dessen Ende die nicht verbrannten Partikel des Mediums von der Asche der Wärmevergasung getrennt werden und in dem Verfahren umgewälzt werden.

6. Verfahren nach einem der vorstehenden Ansprüche, **dadurch gekennzeichnet, dass** beim Schritt (i) ein Unterstützungsfluid durch das Medium (17, 27) hindurch zirkuliert, sodass die Wärmeaustausche durch Konvektion verbessert werden.

7. Verfahren nach dem vorstehenden Anspruch, **dadurch gekennzeichnet, dass** das Unterstützungsfluid mit einer Geschwindigkeit von mehr als 0,1 m/s zirkuliert.

8. Verfahren nach einem der Ansprüche 2 bis 7, **dadurch gekennzeichnet, dass** sich während des Schrittes (iv) das Kondensationswärmeüberträgermedium, das aus unabhängigen Feststoffpartikeln gebildet wird, in dem Kondensationsraum befindet, mit einem Druck höher als der atmosphärische Druck.

## Claims

1. Method for separation between water and a solid, by partial or total evaporation of the water, comprising;
- a step (i) in which humid material is mixed with independent solid particles forming a vaporisation medium (17), the temperature of which is greater than that of said humid material,
- a step (ii) in which the mixture produced in step (i) is introduced into a vaporisation chamber (10) comprising a network (16) for collecting vapour and a vapour output (15) in which the heat provided by said independent solid particles forming the vaporisation medium to the humid material allows the vaporisation of a part of the water introduced,
- a step (iii) in which the vapour produced in step (ii) is introduced into a compression means (30) in which it is collected and compressed, so as to obtain a vapour having a higher pressure and thus a higher temperature,
- a step (iv) in which said compressed vapour is condensed and transmits its enthalpy to independent solid particles, forming a condensation heat-transfer medium, placed in a condensation chamber (20), comprising a network (26) for circulation of pressurised vapour and an output of pressurised condensates (25), at a pressure higher than the atmospheric pressure, so that said compressed vapour condenses in liquid form,
wherein the independent solid particles forming the condensation heat-transfer medium are transferred from the condensation chamber, by an output (24), towards the vaporisation chamber (10), by an input (12), before their use in step (i) and wherein the mixture produced in step (i) circulates in the chamber (10), during step (ii), from a high point towards a low point entirely or partly under the effect of its own weight and in that step (iv) is followed by a step of evacuation, from said condensation chamber, of all or a part of the liquid formed by the condensation of the compressed vapour and by a step of decompression of the condensation chamber (20) .

2. Method for separation between water and a solid, by partial or total evaporation of the water, comprising:
- a step (i) in which humid material is mixed with independent solid particles forming a vaporisation medium (17), the temperature of which is greater than that of said humid material,
- a step (ii) in which the mixture produced in step (i) is introduced into a vaporisation chamber (10), comprising a network (16) for collecting vapour and a vapour output (15), in which the heat provided by the independent solid particles forming the vaporisation medium to the humid material allows the vaporisation of a part of the water introduced,
- a step (iii) in which the vapour produced in step (ii) is sent to an auxiliary device for recovering enthalpy that is supplied by a cold auxiliary heat-transfer fluid, which is heated via the vapour and allows the condensation of the latter, said auxiliary heat-transfer fluid is then compressed, so as to obtain an auxiliary heat-transfer fluid having a higher pressure and thus a higher temperature,
- a step (iv) in which said compressed auxiliary heat-transfer fluid is sent in direct or indirect contact into a condensation chamber (20) with independent solid particles forming a condensation heat-transfer medium, so that said compressed auxiliary heat-transfer fluid condenses in liquid form,
wherein said independent solid particles forming the condensation heat-transfer medium are transferred from the condensation chamber (20), by an output (3), towards the vaporisation chamber (10), by an input (12), so as to form the vaporisation medium (17) before its use in step (i) and wherein the mixture produced in step (i) circulates in the chamber, during step (ii), from a high point towards a low point of said chamber (10), entirely or partly under the effect of its own weight.

3. Method according to claim 1 to 2, **characterised in that** the mixture of vaporisation medium (17) and of treated matter (18) undergoes a step of separation so that the particles of the medium are recirculated into the method and the treated matter (18) is taken out of the method.

4. Method according to claim 1 to 2, **characterised in that** the particles of the evaporation medium (17) are non-combustible and **in that** the mixture of evaporation medium (17) and of treated matter (18) undergoes a step of combustion, after which the unburned particles of the medium are separated from the ashes of the combustion and are recirculated into the method.

5. Method according to claim 1 to 2, **characterised in that** the particles of the evaporator medium (17) are non-combustible and **in that** the mixture of evaporation medium (17) and of treated matter (18) undergoes a step of thermo-gasification, after which the unburned particles of the medium are separated from the ashes of the thermo-gasification and are recirculated into the method

6. Method according to one of the previous claims, **characterised in that**, during step (i), an assistance fluid circulates through the medium (17, 27), so that the heat exchanges by convection are improved.

7. Method according to the previous claim, **characterised in that** the assistance fluid circulates at a speed greater than 0.1m/s.

8. Method according to one of claims 2 to 7, **characterised in that** during step (iv) said condensation heat-transfer medium, formed by independent solid particles, is in said condensation chamber, at a pressure greater than the atmospheric pressure.
